(19) Europäisches Patentamt
European Patent Office
Office européen des brevets

(11) Veröffentlichungsnummer : **0 016 332**
**B1**

(12) **EUROPÄISCHE PATENTSCHRIFT**

(45) Veröffentlichungstag der Patentschrift : **15.12.82**

(51) Int. Cl.³ : **C 08 G 18/48**, C 08 G 18/78, C 08 G 18/30

(21) Anmeldenummer : **80100682.6**

(22) Anmeldetag : **11.02.80**

(54) **Verfahren zur Herstellung von hochelastischen Polyetherurethanschaumstoffen aus Allophanatgruppen aufweisenden Polyisocyanaten.**

(30) Priorität : **22.02.79 DE 2906879**

(43) Veröffentlichungstag der Anmeldung : **01.10.80 (Patentblatt 80/20)**

(45) Bekanntmachung des Hinweises auf die Patenterteilung : **15.12.82 Patentblatt 82/50**

(84) Benannte Vertragsstaaten : **BE DE FR GB SE**

(56) Entgegenhaltungen :
**DE A 2 444 331**
**DE A 2 639 084**
**DE A 2 714 084**

(73) Patentinhaber : **BAYER AG**
**Zentralbereich Patente, Marken und Lizenzen**
**D-5090 Leverkusen 1, Bayerwerk (DE)**

(72) Erfinder : **Müller, Hanns Peter, Dr.**
**St. Pankratius-Strasse 2**
**D-5068 Odenthal (DE)**
Erfinder : **Rabe, Hansjürgen, Dr.**
**Domblick 20**
**D-5090 Leverkusen 31 (DE)**
Erfinder : **Wagner, Kuno, Dr.**
**Am Kiesberg 8**
**D-5090 Leverkusen 1 (DE)**

**EP 0 016 332 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zur Herstellung von hochelastischen Polyetherurethanschaumstoffen aus Allophanatgruppen aufweisenden Polyisocyanaten

Die Erfindung betrifft ein Verfahren zur Herstellung von hochelastischen, offenzelligen, Urethangruppen aufweisenden Schaumstoffen aus Polyetherpolyolen, modifizierten Polyisocyanaten, Wasser, Katalysatoren, Emulgatoren bzw. Stabilisatoren, gegebenenfalls organischen Treibmitteln und Vernetzungsmitteln. Weichelastische Polyurethanschaumstoffe haben in breitem Umfang in der Polsterindustrie zur Herstellung von Sitz- und Rückenpolsterungen Einsatz gefunden.

Von weichelastischen Schaumstoffen erwartet man einen hohen Sitzkomfort, der vergleichbar sein soll mit dem von Schaumstoffen aus Naturlatex bzw. dem aus einer Kombination üblicher Polstermaterialien, wie Federkernen, Naturhaaren oder Watte. Physikalisch läßt sich die Qualität des Polsterelements wiedergeben durch den Stauchfaktor, der im angelsächsischen Schrifttum auch als SAG-Faktor bezeichnet wird, das ist der Quotient aus der Härtezahl bei 65 %iger und 25 %iger Eindrückung, wobei die gesamte Verformung während jeweils 1 Minute konstant gehalten wird, und dem Verlauf der Kraft-Verformungskennlinien. Der Stauchfaktor sollte für die Erzielung Guter Polstereigenschaften einen Wert über 2,5 besitzen, und die Kraft-Verformungskennlinien sollten kein Plateau aufweisen, d.h. es sollte bei geringen Kraftänderungen keine große bis sehr große, sondern nur eine geringe Änderung der Verformung eintreten.

Von einem Schaumstoff, der in der Polsterindustrie eingesetzt werden soll, erwartet man ferner, daß seine Festigkeitseigenschaften möglichst hoch sind, um ein Zerreißen bei einer mechanischen Beanspruchung, wie es beispielsweise beim Überziehen mit Textilien erfolgen kann, zu vermeiden, und daß seine Härte bei gegebener Rohdichte (kg/m$^3$) möglichst hoch sein soll. Aus wirtschaftlichen Gründen sind Schaumstoffe mit Rohdichten zwischen 15 und 40 kg/m$^3$ dabei besonders bevorzugt.

Um diese verschiedenen Forderungen zu erfüllen wurde versucht, inerte Füllstoffe organischer oder anorganischer Art einzusetzen. Zum Stand der Technik gehören dabei die Zugabe fester Zusatzstoffe in eine der zur Verschäumung dienenden Komponenten oder direkt in das Verschäumungsgemisch, beispielsweise indem die Füllstoffe direkt in die Mischkammer einer Verschäumungsmaschine zudosiert werden. Weiterhin wurde auch schon versucht, Polymerisationen in den zur Verschäumung dienenden Polyolen durchzuführen. Bekannt sind z.B. die im Handel befindlichen Dispersionen von Copolymeren aus Styrol und Acrylnitril in Hydroxylgruppen aufweisenden Polyethern.

Aus den DE-Offenlegungsschriften 2 639 084 und 2 714 084 ist bekannt, die erfindungsgemäß einzusetzenden Vernetzergemische herzustellen und mit den unterschiedlichsten Polyisocyanaten und höhermolekularen Polyhydroxylverbindungen zur Herstellung von Polyurethankunststoffen einschließlich Schaumstoffen umzusetzen. Diese Veröffentlichungen vermitteln jedoch weder nach Aufgabe noch nach Lösung die erfindungsgemäße Lehre. Nach der vorliegenden Erfindung kommt es darauf an, bestimmte Polyisocyanate auszuwählen und mit dem Vernetzergemisch und Hydroxylgruppen aufweisenden Polyäthern zu kombinieren; diese Auswahl führt zu Polyurethanschaumstoffen mit den gewünschten Eigenschaften, nämlich mit Latexschaum-ähnlichem Charakter und erhöhten Härtewerten.

Es hat sich auch gezeigt, daß sich nach den Verfahren des Standes der Technik Schaumstoffe mit hohen Härtegraden bei vorgegebener Rohdichte nicht bzw. nur mit erheblichem Produktionsrisiko herstellen lassen.

Aufgabe der vorliegenden Erfindung ist daher, diese Nachteile zu vermeiden und darüber hinaus in technisch einfacher Weise Schaumstoffe zur Verfügung zu stellen, welche in sehr weiten Rohdichtebereichen herstellbar sind und hohe Härtegrade bei vorgegebener Rohdichte aufweisen.

Dieses Ziel kann überraschenderweise erreicht werden, wenn man die Herstellung von Polyurethanschaumstoffen aus Polyetherpolyolen, Allophanatgruppen aufweisenden Polyisocyanaten, Wasser, Katalysatoren, Emulgatoren bzw. Stabilisatoren, gegebenenfalls organischen Treibmitteln in Gegenwart der erfindungsgemäßen Vernetzer durchführt. Die Tatsache, daß gerade die Kombination von modifizierten Isocyanaten, welche bereits Verzweigungsstellen im Molekül besitzen und den erfindungsgemäßen Vernetzern zu hochelastischen Schaumstoffen mit den gewünschten höheren Härtegraden führt, ist äußerst überraschend und war für den Fachmann nicht vorhersehbar, da an sich die gewünschten Eigenschaften sich gegenseitig ausschließen. Nach den bisherigen Erfahrungen ergibt höhere Vernetzung ganz allgemein Produkte mit spröderen Eigenschaften. Bei dem vorliegenden erfindungsgemäßen Verfahren ist es jedoch gelungen, Schaumstoffe zu erzeugen, die trotz der erhöhten Härte Latexschaum-ähnlichen Charakter besitzen.

Verfahren zur Herstellung von hochelastischen, Urethangruppen aufweisenden Schaumstoffen mit erhöhter Eindruckhärte durch Umsetzung von mindestens zwei Hydroxylgruppen aufweisenden Polyethern vom Molekulargewicht 400 bis 10 000 mit Allophanatgruppen aufweisenden Polyisocyanaten in Gegenwart von Vernetzungsmitteln und Wasser und gegebenenfalls in Gegenwart von Katalysatoren, Emulgatoren, Stabilisatoren, organischen Treibmitteln und weiteren Hilfs- und Zusatzmitteln, dadurch gekennzeichnet, daß man die Umsetzung in Gegenwart von 0,5 bis 10, vorzugsweise 2-5 g/100 g des Polyethers eines technischen Vernetzergemisches der allgemeinen Formel

$$C_nH_{2n+2}O_n$$

n = 2 bis 10, welches im statistischen Mittel mindestens 4 Hydroxylgruppen pro Molekül aufweist und gegebenenfalls Wasser in einer Menge von 5 bis 50 g/100 g Vernetzer enthält, wobei dem Vernetzergemisch zusätzlich Harnstoff in einer Menge von 5 bis 30 g/100 g Vernetzer bzw. Vernetzer-Wasser-Gemisch oder ε-Caprolactam in einer Menge von 10 bis 40 g/100 g Vernetzer bzw. Vernetzer-Wasser-Gemisch zugesetzt wurde, durchführt.

Bevorzugt gemäß Erfindung ist ferner, daß man als Polyisocyanat ein Allophanatgruppen enthaltendes Toluylendiisocyanat verwendet.

Für die Durchführung des erfindungsgemäßen Verfahrens werden eingesetzt :

1. Als Ausgangskomponenten aliphatische, cycloaliphatische, araliphatische, aromatische und heterocyclische, araliphatische, aromatische und heterocyclische Allophanatgruppen aufweisende Polyisocyanate z.B. Allophanatgruppen aufweisende Polyisocyanate, wie sie z.B. in der GB-Patentschrift 994 890, der BE-Patentschrift 761 626 und der NL-Patentanmeldung 7 102 524 beschrieben werden.

Bevorzugte Polyisocyanate sind :

Allophanatgruppen aufweisende Polyisocyanate, die sich vom 2,4- und/oder 2,6-Toluylendiisocyanat bzw. vom 4,4'- und/oder 2,4'-Diphenylethandiisocyanat ableiten.

2. Als Ausgangskomponenten ferner Polyether mit mindestens zwei Hydroxylgruppen von einem Molekulargewicht in der Regel von 400-10 000, insbesondere zwei bis acht Hydroxylgruppen aufweisende Polyether, speziell solche vom Molekulargewicht 3 000 bis 6 000, gegebenenfalls unter Mitverwendung von Polyestern, Polythioethern, Polyacetalen, Polycarbonaten und Polyesteramiden in untergeordneten Mengen (0,5-50, bevorzugt 1-30 Gew.-%, bezogen auf Polyether).

a) Die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäß geeignet.

b) Unter den Polythioäthern seien insbesondere die Kondensationsprodukte von thiodiglykol mit sich selbst und/oder mit anderen Glykolen, Dicarbonsäuren, Formaldehyd, Aminocarbonsäuren oder Aminoälkoholen angeführt. Je nach den Co-Komponenten handelt es sich bei den Produkten z.B. um Polythiomischäther, Polythioätherester oder Polythioätheresteramide.

c) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäß geeignete Polyacetale herstellen.

d) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751 ; DE-Offenlegungsschrift 2 605 024).

e) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

f) Die gegebenenfalls in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt :

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure ; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-Hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

h) Die genannten Polyhydroxylverbindungen können vor ihrer Verwendung im Polyisocyanat-Polyadditionsverfahren gegebenenfalls noch in der verschiedensten Weise modifiziert werden : So läßt sich gemäß DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonaformamidin-bzw. Acylharnstoffgruppen aufweisende Polyhydroxyl-verbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

Vertreter der genannten erfindungsgemäß zu verwendenden Verbindungen sind z.B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, band VII, Vieweg-Höchtlen, Carl-Hanser-Verlag, München, 1966, z.B. auf den Seiten 45-71, beschrieben. Selbstverständlich können Mischungen der obengenannten Verbindungen mit mindestens zwei Hydroxylgruppen mit einem Molekulargewicht von 400-10 000 eingesetzt werden.

Erfindungsgemäß werden als weitere Ausgangskomponente ein technisches Gemisch von Verbindungen der allgemeinen Formel

$$C_nH_{2n+2}O_n$$

n = 2 bis 10,
welches im statistischen Mittel mindestens 4 Hydroxylgruppen pro Molekül aufweist und gegebenenfalls Wasser in einer Menge von 5 bis 50 g/100 g Vernetzer enthält, wobei dem Vernetzergemisch zusätzlich Harnstoff in einer Menge von 5 bis 30 g/100 g Vernetzer bzw. Vernetzer-Wasser-Gemisch oder ε-Caprolactam in einer Menge von 10 bis 40 g/100 g Vernetzer bzw. Vernetzer-Wasser-Gemisch zugesetzt wurde, eingesetzt, das als Vernetzungsmittel dient.

Die technischen Gemische von Verbindungen der obengenannten allgemeinen Formel enthalten z.B. folgende Komponenten : Ethylenglykol, Glycerin, Erythrit, Xylit, Sorbit, Mannit und Dulcit.

Erfindungsgemäß besonders bevorzugt sind als Vernetzergemische Gemische von niedermolekularen Polyolen, die durch Reduktion von Gemischen von Hydroxyaldehyden und Hydroxyketonen (« Formose ») erhalten werden, wie sie bei der Selbst-kondensation von Formaldehydhydrat in Gegenwart von Metallverbindungen als Katalysator und von zur Endiolbildung befähigten Verbindungen als Co-Katalysator entstehen (DE-Offenlegungsschriften 2 619 084, 2 714 084, 2 714 104, 2 721 186, 2 738 154, 2 738 512, 2 756 270 und 2 831 659).

Derartige Vernetzergemische enthalten vielfach z.B. folgende Mischungsbereiche :

n = 2 zweiwertige Alkohole 0,1 bis 20 Gew.-%

n = 3 dreiwertige Alkohole 0,2 bis 30 Gew.-%
n = 4 vierwertige Alkohole 0,2 bis 40 Gew.-%
n = 5 fünfwertige Alkohole 1,0 bis 40 Gew.-%
n = 6 sechswertige Alkohole 0,1 bis 50 Gew.-%
n = 7 siebenwertige und höhere Alkohole 0,1 bis 50 Gew.-%.

Der erfindungsgemäße Zusatz von Wasser und/oder Harnstoff und/oder ε-Caprolactam erhöht die Fließfähigkeit der erfindungsgemäßen technischen Vernetzergemische, so daß eine maschinelle Dosierung in einfacher Weise erfolgen kann.

Dem Verschäumungsansatz werden die technischen Vernetzergemische in einer Menge von 0,5 bis 10 g vorzugsweise 2 bis 5 g, bezogen auf den 100 g Polyether, zugesetzt.

Zusätzlich zu den erfindungsgemäßen Vernetzern können selbstverständlich die aus der Polyurethanchemie bekannten niedermolekularen Verbindungen mit mindestens zwei gegenüber Isocyanaten reaktionsfähigen Wasserstoffatomen vom MG 32-400 mitverwendet werden.

Als Beispiele für derartige Verbindungen seien genannt : Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethylcyclohexan, 2-Methyl-1,3-propandion, Trimethylolpropan, Hexantriol-(1,2,6), Trimethylolethan, Pentaerythrit, Chinit, Diäthylenglykol, Triäthylenglykol, Tetraäthylenglykol, Polyäthylenglykole mit einem Molekulargewicht bis 400, Dipropylenglykol, Polypropylenglykole mit einem Molekulargewicht bis 400, Dibutylenglykol, Polybutylenglykole mit einem Molekulargewicht bis 400, 4,4'-Dihydroxydiphenylpropan, Di-hydroxymethyl-hydrochinon, Äthanolamin, Diäthanolamin, Triäthanolamin, 3-Aminopropanol, Äthylendiamin, 1,3-Diaminopropan, 1-Mercapto-3-aminopropan, 4-Hydroxy- oder -Amino-phthalsäure, Bernsteinsäure, Adipinsäure, Hydrazin, N,N'-Dimethylhydrazin, 4,4'-Diaminodiphenylmethan, Toluylendiamin, Methylen-bis-chloranilin, Methylen-bis-anthranilsäureester Diaminobenzoesäureester und die isomeren Chlorphenylendiamine.

Auch in diesem Fall können Mischungen von verschiedenen Verbindungen mit mindestens zwei gegenüber Isocyanaten reaktionsfähigen Wasserstoffatomen mit einem Molekulargewicht von 32-400 verwendet werden.

Erfindungsgemäß können auch Aminoverbindungen vom Molekulargewicht 32-400 in untergeordneten Mengen mit eingesetzt werden.

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan (« Isophorondiamin »), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, hydracrylsäure und Terephthalsäure ; Semicarbazido-alkylen-hydrazide wie z.B. β-Semicarbazidopropionsäurehydrazid (DE-Offenlegungsschrift 1 770 591), Semicarbazido-alkylencarbazinester wie z.B. 2-Semicarbazidoäthyl-carbazinester (DE-Offenlegungsschrift 1 918 504) oder auch Amino-semicarbazid-Verbindungen wie z.B. β-Aminoäthyl-semicarbazido-carbonat (DE-Offenlegungsschrift 1 902 931). Zur Steuerung ihrer Reaktivität können die Aminogruppen ganz oder teilweise durch Aldimin-bzw. Ketimin-Gruppen blockiert sein (US-Patentschrift 3 734 894 ; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-zene (DE-Offenlegungsschrift 2 638 731) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, hydracrylsäure und Terephthalsäure ; Semicarbazido-alkylen-hydrazide wie z.B. β-Semicarbazidopropionsäurehydrazid (DE-Offenlegungsschrift 1 770 591), Semicarbazido-alkylencarbazinester wie z.B. 2-Semicarbazidoäthylcarbazinester (DE-Offenlegungsschrift 1 918 504) oder auch Amino-semicarbazid-Verbindungen wie z.B. β-Aminoäthyl-semicarbazido-carbonat (DE-Offenlegungsschrift 1 902 931). Zur Steuerung ihrer Reaktivität können die Aminogruppen ganz oder teilweise durch Aldimin-bzw. Ketimin-Gruppen blockiert sein (US-Patentschrift 3 734 894 ; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350),

2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

3. Als weitere erfindungsgemäß geeignete niedermolekulare Polyole vom Molekulargewicht bis 400 Esterdiole der allgemeinen Formeln

$$HO-(CH_2)_x-CO-O-(CH_2)_y-OH \quad \text{und} \quad HO-(CH_2)_x-O-CO-R-CO-O-(CH_2)_x-OH$$

in denen

R einen Alkylenrest mit 1-10, vorzugsweise 2-6, C-Atomen bzw. einen Cycloalkylen- oder Arylenrest mit 6-10 C-Atomen

$x = 2\text{-}6$ und

$y = 3\text{-}5$

bedeuten,

z.B. δ-Hydroxybutyl-ε-hydroxy-capronsäureester, ω-Hydroxyhexyl-γ-hydroxybuttersäureester, Adipinsäure-bis-(β-hydroxyäthyl)ester und Terephthalsäure-bis(β-hydroxyäthyl)ester ;

Diolurethane der allgemeinen Formel

$$HO-(CH_2)_x-O-CO-NH-R'-NH-CO-O-(CH_2)_x-OH$$

in der

R' einen Alkylenrest mit 2-15, vorzugsweise 2-6, C-Atomen oder einen Cycloalkylen- oder Arylenrest mit 6-15 C-Atomen und

x eine Zahl zwischen 2 und 6

darstellen,

z.B. 1,6-Hexamethylen-bis-(β-hydroxyäthylurethan) oder 4,4'-Diphenylmethan-bis-(δ-hydroxybutylurethan) ;

sowie Diolharnstoffe der allgemeinen Formel

$$HO-(CH_2)_x-\underset{R'''}{\underset{|}{N}}-CO-NH-R''-NH-CO-\underset{R'''}{\underset{|}{N}}-(CH_2)_x-OH$$

in der

R'' einen Alkylenrest mit 2-15, vorzugsweise 2-9, C-Atomen oder einen Cycloalkylen- oder Arylenrest mit 6-15 C-Atomen,

R''' Wasserstoff oder eine Methylgruppe und

x die Zahlen 2 oder 3

bedeuten,

z.B. 4,4'-Diphenylmethan-bis-(β-hydroxyäthylharnstoff) oder die Verbindung

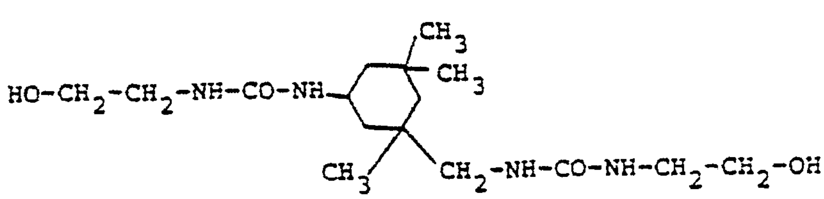

Für manche Zwecke ist es vorteilhaft, Polyole einzusetzen, welche Sulfonat- und/oder Phosphonat-

gruppen enthalten (DE-Offenlegungsschrift 2 719 372), vorzugsweise das Addukt von Bisulfit an Butandiol-1,4 bzw. dessen Alkoxylierungsprodukte.

4. Wasser ;

5. Gegebenenfalls als Hilfs- und Zusatzmittel :

a) Wasser und/oder leicht flüchtige anorganische oder organische Substanzen als Treibmittel. Als organische Treibmittel kommen z.B. Aceton, Äthylacetat, halogen-substituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

b) Katalysatoren der an sich bekannten Art, z.B. tertiäre Amine, wie Triäthylamin, Tributylamin, N-Methyl-morpholin, N-Äthyl-morpholin, N,N,N',N'-Tetramethyl-äthylendiamin. Pentamethyl-diäthylentriamin und höhere Homologe (DE-Offenlegungsschriften 2 624 527 und 2 624 528), 1,4-Diaza-bicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE-Offenlegungsschrift 1 720 633) Bis-(dialkylamino)alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367 ; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengennanten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Polyäther, eingesetzt.

c) Oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens :

Die Reaktionskomponenten werden erfindungsgemäß nach dem an sich bekannten Einstufenverfahren, dem Prepolymer-verfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Beim maschinellen Verschäumen kann das erfindungsgemäße Vernetzergemisch über eine getrennte Leitung oder in Gegenwart der Polyether dosiert werden.

Erfindungsgemäß lassen sich insbesondere kalthärtende Schaumstoffe herstellen (vgl. GB-Patentschrift 1 162 517, DE-Offenlegungsschrift 2 153 086).

Die nach dem erfindungsgemäßen Verfahren hergestellten Schaumstoffe werden beispielsweise als Polstermaterialien, Matratzen, Verpackungsmaterialien, Folien für Kaschierzwecke und als Isolationsmaterialien verwendet. Die nach dem erfindungsgemäßen Verfahren hergestellten hochelastischen Schaumstoffe eignen sich zur Flammkaschierung mit Folien, Geweben und Gewirken aus natürlichen und synthetischen Materialien. Folien aus diesem Schaumstoffen lassen sich auch durch Hochfrequenz und Ultraschall verschweißen.

Das erfindungsgemäße Verfahren wird durch die folgenden Beispiele näher erläutert.

Herstellung der erfindungsgemäßen Vernetzer (Beispiele A und B)

Beispiel A

3 051 g ε-Caprolactam werden mit 7 365 g wasserfreiem Formit (mittlere Funktionalität-4, Herstellung gemäß Beispiel 3 von DE-OS 27 56 270) mit folgender Komponenten-verteilung :

Verbindungen mit

2 C-Atomen : 3,9 Gew.-%
3 C-Atomen : 20,7 Gew.-%
4 C-Atomen : 24,1 Gew.-%
5 C-Atomen : 22,4 Gew.-%
6 C-Atomen : 22,0 Gew.-%
7 C-Atomen : 6,8 Gew.-% und mehr

und 593 g Wasser gemischt und auf 60 °C aufgeheizt. Die homogene Mischung wird 1 Stunde bei 60 °C gerührt. Nach Abkühlen erhält man 10 999 g des erfindungsgemäßen Vernetzers. Der Vernetzer besitzt einen Wassergehalt von 5,3 % $H_2O$.

Beispiel B

210 g Harnstoff, 954 g Formit wie in Beispiel A verwendet und 29,85 g Wasser werden gemischt und unter Rühren auf 60 °C aufgeheizt. Die Mischung wird 1 Stunde bei 60 °C gerührt. Nach Abkühlen erhält man 1 193,85 g eines erfindungsgemäßen Vernetzers. Der Vernetzer besitzt einen Wassergehalt von 2,5 % $H_2O$.

Beispiel 1

Ein Gemisch, bestehend aus

100 Gewichtsteilen eines Poly(oxyethylen-oxypropylen)-triols des mittleren Molekulargewichts 5 000 und einer OH-Zahl von 35
3,2 Gewichtsteilen Wasser
0,2 Gewichtsteilen Triethylendiamin
3,2 Gewichtsteilen Diisopropanolamin
0,6 Gewichtsteilen Diethanolamin
0,3 Gewichtsteilen eines chlorhaltigen Polysiloxanstabilisators
2,0 Gewichtsteilen Trichlorethylphosphat und
5 Gewichtsteilen Formitassoziat gemäß Beispiel A

wird mit 65,3 Gewichtsteilen eines allophanatisierten Toluylendiisocyanats des NCO-Gehaltes 40,5 % in einem offenen Gefäß sur Reaktion gebracht. Es entsteht ein offenzelliger, nicht schrumpfender Schaumkörper mit folgenden mechanischen Eigenschaften :

Dichte 35 kg/$m^3$ (n.DIN 53 420), Stauchhärte bei 40 % Kompression 5,9 kPa (n.DIN 53 577), Druckverformungsrest bei 90 % Kompression 10,1 % (DIN 53 572).

## Beispiel 2

Ein Gemisch wie in Beispiel 1 genannt wird mit 5 Gew.-Teilen Formitassoziat gemäß Beispiel B und 65,9 Gew.-Teilen des in Beispiel 1 genannten Isocyanats in einem offenen Gefäß zur Reaktion gebracht. Es entsteht ein offenzelliger, nicht schrumpfender hochelastischer Schaumkörper mit folgenden mechanischen Eigenschaften :

Dichte 34 kg/$m^3$, Stauchhärte bei 40 % Kompr. 5,6 kPa Druckverformungsrest bei 90 % Kompr. 11,0 %.

## Beispiel 3

Ein Gemisch, bestehend aus

100 Gewichtsteilen eines Poly(oxyethylen-oxypropylen) triols des mittleren Molgewichtes 6.000 und einer OH-Zahl von 28
3,2 Gewichtsteilen Wasser
0,15 Gewichtsteilen Triethylendiamin
3,0 Gewichtsteilen Diisopropanolamin
0,8 Gewichtsteilen Diethanolamin
0,3 Gewichtsteilen Stabilisator (wie in Beispiel 1 genannt)
2,0 Gewichtsteilen Trichlorethylphosphat und
5,0 Gewichtsteilen Formitassoziat gemäß Beispiel A

wird mit 64,2 Gewichtsteilen des in Beispiel 1 genannten Isocyanats auf einer kontinuierlichen Blockverschäumungsanlage vom Typ UBT zur Reaktion gebracht. Es entsteht ein offenzelliger, nicht schrumpfender, hochelastischer Schaumstoff mit folgenden mechanischen Eigenschaften :

Dichte 35 kg/$m^3$, Stauchhärte bei 40 % Kompr. 4,0 kPa, Druckverformungsrest bei 90 % Kompr. 6,7 %, sag-Faktor 3,1 (nach Fisher Body)

## Beispiel 4 .

Ein Gemisch, wie in Beispiel 3 genannt, wird mit 5 Gewichtsteilen Formitassoziat gemäß Beispiel B und mit 64,6 Gewichtsteilen des in Beispiel 1 genannten Isocyanats auf einer kontinuierlichen Blockverschäumungsanlage vom Typ UBT zur Reaktion gebracht. Es entsteht ein offenzelliger, nicht schrumpfender Schaumstoff mit folgenden mechanischen Eigenschaften :

Dichte 35 kg/$m^3$, Stauchhärte bei 40 % Kompr. 4,1 kPa, Druckverformungsrest bei 90 % Kompr. 6,4 %, sag-Faktor 3,1.

## Beispiel 5

Ein Gemisch aus

100 Gewichtsteilen eines wie in Beispiel 3 genannten Polyethers
3,1 Gewichtsteilen Wasser
0,2 Gewichtsteilen Triethylendiamin
2,4 Gewichtsteilen Diisopropanolamin
1,0 Gewichtsteilen Diethanolamin
0,5 Gewichtsteilen Stabilisator (wie in Beispiel 1 genannt) und
5 Gewichtsteilen Formit der mittleren Funktionalität 4,0 gemäß Beispiel 3 von DE-OS 27 56 270 mit der Komponentenverteilung :

Verbindungen mit

2 C-Atomen : 3,9 Gew.-%
3 C-Atomen : 20,7 Gew.-%
4 C-Atomen : 24,1 Gew.-%
5 C-Atomen : 22,4 Gew.-%
6 C-Atomen : 22,0 Gew.-%
7 C-Atomen : 6,8 Gew.-% und mehr

wird mit 64,4 Gewichtsteilen des in Beispiel 1 genannten Isocyanats in einem offenen Gefäß zur Reaktion gebracht. Es entsteht ein offenzelliger, nicht schrumpfender, hochelastischer Schaum mit folgenden mechanischen Eigenschaften :

Dichte 36 kg/m$^3$, Stauchhärte bei 40 % Kompr. 3,9 kPa, Druckverformungsrest bei 90 % Kompr. 4,8 %.

Beispiel 6

Ein Gemisch, wie in Beispiel 5 genannt, wird mit 5 Gewichtsteilen Formit der mittleren Funktionalität 6 gemäß Beispiel 16 der DE-OS 2 831 659 mit folgender Komponentenverteilung :

Verbindungen mit

2 C-Atomen 0,15 Gew.-%
3 C-Atomen 0,6 Gew.-%
4 C-Atomen 1,3 Gew.-%
5 C-Atomen 11,5 Gew.-%
6 C-Atomen 39,3 Gew.-%
7 C-Atomen 37,6 Gew.-%
8 C-Atomen 9,5 Gew.-% und mehr

(erfindungsgemäß mit 20 % Wasser versetzt) und 67,2 Gewichtsteilen des in Beispiel 1 genannten Isocyanats in einem offenen Gefäß zur Reaktion gebracht. Es entsteht ein offenzelliger, nicht schrumpfender, hoch-elastischer Schaum mit folgenden mechanischen Eigenschaften :

Dichte 36 kg/m$^3$, Stauchhärte bei 6,4 % Kompr. 6,8 kPa, Druckverformungsrest bei 90 % Kompr. 6,0 %, sag-Faktor 2,6.

Beispiel 7 (Vergleichsbeispiel)

Ein Gemisch, bestehend aus

100 Gewichtsteilen eines Poly(oxyethylen-oxypropylen) triols, das 5 % einer Polyharnstoffdispersion enthält und eine OH-Zahl von 33 besitzt
3,5 Gewichtsteilen Wasser
0,15 Gewichtsteilen Triethylendiamin
1,5 Gewichtsteilen Diethanolamin
0,5 Gewichtsteilen Stabilisator (wie in Beispiel 1 .genannt)
2,0 Gewichtsteilen Trichlorethylphosphat
5 Gewichtsteilen Formitassoziat gemäß Beispiel B
0,1 Gewichtsteilen Zinndioctoat

wird mit 54,2 g Gewichtsteilen Toluylendiisocyanat 80/20 in einem offenen Gefäß zur Reaktion gebracht. Es entsteht ein Offenzelliger, nicht schrumpfender, hochelastischer Schaumkörper mit folgenden mechanischen Eigenschaften :

Dichte 28 kg/m$^3$, Stauchhärte bei 40 % Kompr. 2,1 kPa, Druckverformungsrest bei 90 % Kompr. 9,2 %.

Ein Vergleichsschaum ohne 5 Gewichtsteile Formitassoziat zeigt bei rezepturmäßiger Berücksichtigung der hierfür weniger einzusetzenden Toluylendiisocyanatmenge die mechanischen Eigenschaften :

Dichte 26 kg/m$^3$, Stauchhärte bei 40 % Kompr. 2,2 kPa, Druckverformungsrest bei 90 % Kompr. 7,6 %.

Nachstehende Tabelle zeigt einen Vergleich der Beispiele 1-6 gegenüber hochelastischen Schaumqualitäten, die ohne die erfindungsgemäßen Zusätze hergestellt werden bzw. bekannte Zusätze enthalten.

(Siehe die Tabelle, Seite 11)

| | Beisp. 1 | Beisp. 2 | Beisp. 3 | Beisp. 4 | Beisp. 5 | Beisp. 6 | Vergl. 1 | Vergl. 2 | Vergl. 3 |
|---|---|---|---|---|---|---|---|---|---|
| Dichte ($kg/m^3$) | 35 | 34 | 35 | 35 | 36 | 36 | 33 | 36 | 35 |
| Stauchhärte b. 40 % Kompr. (kPa) | 5,9 | 5,6 | 4,0 | 4,1 | 3,9 | 6,8 | 1,8 | 3,1 | 3,5 |
| Druckverformungsrest b. 90 % Kompr. (4) | 10,1 | 11,0 | 6,7 | 6,4 | 4,8 | 6,0 | 2,3 | 2,4 | 8,6 |
| sag-Faktor | — | — | 3,1 | 3,1 | — | 2,6 | 3,1 | 2,9 | 2,7 |

wobei :

Vergleich 1 eine Rezeptur gemäß Beispiel 1 ohne Vernetzer (Formit bzw. -Assoziat) und die dafür einzusetzende Menge Isocyanat (wie in Beispiel 1 beschrieben) beinhaltet,

Vergleich 2 die gleiche Rezeptur mit 3 Gewichtsteilen Glycerin und der dafür einzusetzenden Isocyanatmenge beinhaltet,

Vergleich 3 eine Rezeptur auf Basis eines Poly(oxyethylen-oxypropylen)triols, das 20 % Polyharnstoffdispersion enthält und Toluylendiisocyanat 80/20, wie in Beispiel 7 beschrieben, beinhaltet.

## Ansprüche

1. Verfahren zur Herstellung von hochelastischen, Urethangruppen aufweisenden Schaumstoffen mit erhöhter Eindruckhärte durch Umsetzung von mindestens zwei Hydroxylgruppen aufweisenden Polyethern vom Molekulargewicht 400 bis 10 000 mit Allophanatgruppen aufweisenden Polyisocyanaten in Gegenwart von Vernetzungsmitteln und Wasser und gegebenenfalls in Gegenwart von Katalysatoren, Emulgatoren, Stabilisatoren, organischen Treibmitteln und weiteren Hilfs- und Zusatzmitteln, dadurch gekennzeichnet, daß man die Umsetzung in Gegenwart von 0,5 bis 10, vorzugsweise 2-5 g/100 g des Polyethers eines technischen Vernetzergemisches der allgemeinen Formel

$$C_nH_{2n+2}O_n$$

n = 2 bis 10,
welches im statistischen Mittel mindestens 4 Hydroxylgruppen pro Molekül aufweist und gegebenenfalls Wasser in einer Menge von 5 bis 50 g/100 g Vernetzer enthält, wobei dem Vernetzergemisch zusätzlich Harnstoff in einer Menge von 5 bis 30 g/100 g Vernetzer bzw. Vernetzer-Wasser-Gemisch oder ε-Caprolactam in einer Menge von 10 bis 40 g/100 g Vernetzer bzw. Vernetzer-Wasser-Gemisch zugesetzt wurde, durchführt.

2. Verfahren nach Anspruch 1, dadurch gekennzeichnet, daß man als Polyisocyanat ein Allophanatgruppen enthaltendes Toluylendiisocyanat und/oder 4,4'- und/oder 2,4'-Diphenylmethandiisocyanat verwendet.

3. Schaumstoffe, erhalten nach den Verfahren gemäß Ansprüchen 1 und 2.

## Claims

1. Process for the production of highly elastic foams containing urethane groups with increased impression hardness by the reaction of polyethers containing at least two hydroxyl groups and having a molecular weight of 400 to 10,000 with polyisocyanates containing allophanate groups in the presence of cross-linking agents and water and optionally in the presence of catalysts, emulsifiers, stabilisers, organic blowing agents and other auxiliaries and additives, characterised in that the reaction is carried out in the presence of 0.5 to 10, preferably 2-5 g/100 g of the polyether of a commercial cross-linking mixture of the general formula

$$C_nH_{2n+2}O_n$$

n = 2 to 10,
which contains on a statistical average at least 4 hydroxyl groups per molecule and optionally water in a quantity of 5 to 50 g/100 g cross-linking agent, wherein urea, in a quantity of 5 to 30 g/100 g cross-linking agent or cross-linking agent/water mixture, or ε-caprolactam, in a quantity of 10 to 40 g/100 g cross-linking agent or cross-linking agent/water mixture has been additionally added to the cross-linking agent mixture.

2. Process according to Claim 1, characterised in that an allophanate-group-containing toluylene diisocyanate and/or 4,4'- and/or 2,4'-diphenylmethane diisocyanate is used as polyisocyanate.

3. Foams obtained by the processes according to Claims 1 and 2.

**Revendications**

1. Procédé de fabrication de mousses d'une haute élasticité comportant des groupes uréthane et ayant une dureté accrue à l'empreinte par réaction de polyéthers comportant au moins deux groupes hydroxy et ayant un poids moléculaire se situant entre 400 et 10 000 avec des polyisocyanates comportant des groupes allophanate en présence d'agents de réticulation et d'eau et éventuellement en présence de catalyseurs, d'émulsionnants, de stabilisants, d'agents moussants organiques et d'autres agents auxiliaires et additifs, caractérisé en ce qu'on effectue la réaction en présence de 0,5 à 10, de préférence, 2-5 g/100 g du polyéther, d'un mélange technique d'agent de réticulation de formule générale

$$C_nH_{2n+2}O_n$$

$n = 2$ à 10,
ce mélange comportant, selon une moyenne statistique, au moins quatre groupes hydroxy par molécule, tandis qu'il contient éventuellement de l'eau en une quantité de 5 à 50 g/100 g d'agent de réticulation, tout en ajoutant, en outre, à ce mélange d'agent de réticulation, de l'urée en une quantité de 5 à 30 g/100 g d'agent de réticulation ou du mélange d'agent de réticulation/eau ou encore de l'ε-caprolactame en une quantité de 10 à 40 g/100 g d'agent de réticulation ou du mélange d'agent de réticulation/eau.

2. Procédé suivant la revendication 1, caractérisé en ce que, comme polyisocyanate, on utilise du 4,4'-diphénylméthane-diisocyanate et/ou du 2,4'-diphénylméthane-diisocyanate et/ou du toluylène-diisocyanate contenant des groupes allophanate.

3. Mousses obtenues par le procédé suivant les revendications 1 et 2.